# EUROPÄISCHE PATENTSCHRIFT

(11) **EP 2 744 683 B1**
(45) Veröffentlichungstag und Bekanntmachung des Hinweises auf die Patenterteilung: **17.06.2020**
(21) Anmeldenummer: 12766864.8
(22) Anmeldetag: 17.08.2012
(51) Int. Cl.: B60N 2/80

(54) **FAHRZEUGAUSSTATTUNGSTEIL**
VEHICLE ACCESSORY
COMPOSANT D'ÉQUIPEMENT AUTOMOBILE

(30) Priorität: 17.08.2011 DE 102011110389
(43) Veröffentlichungstag der Anmeldung: 25.06.2014
(73) Patentinhaber: GRAMMER AG, 92224 Amberg (DE)
(72) Erfinder: KOTZ, Maximilian, 92286 Rieden (DE)
(74) Vertreter: Roche, von Westernhagen & Ehresmann
(86) Internationale Anmeldenummer: PCT/DE2012/000834
(87) Internationale Veröffentlichungsnummer: WO 2013/023642

(56) Entgegenhaltungen:
- EP-A2- 1 588 892
- EP-A2- 1 859 977
- DE-A1- 3 211 708
- DE-A1- 10 307 481
- DE-A1-102009 019 033
- US-A- 4 854 632

## Beschreibung

Die Erfindung betrifft eine Kofptütze.

Aus dem Stand der Technik ist eine Kopfstütze bekannt, die eine Höhenverstellvorrichtung aufweist. Die Höhenverstellung eines Kopfanlageteils relativ zu einem tragstangenfesten Basisteil, wird bei dieser Kopfstütze z.B. durch einen Elektromotor vorgenommen, wobei Verzahnungen des Basisteils und des Kopfanlageteils zusammenwirken. Diese ansonsten vorteilhafte Verstellvorrichtung ist hinsichtlich ihres Platzbedarfs und der Flexibilität der Anordnung innerhalb des Kopfanlageteils verbesserungswürdig.

Aus Dokumente EP1859977A2, DE3211708A1 sind Verstellmechanismen für Fahrzeugausstattungsteile bekannt. Das Dokument DE102009019033A1 offenbart eine Verstellvorrichtung einer Kopfstütze, die als nächstliegender Stand der Technik betrachtet ist.

Es war Aufgabe der Erfindung eine Kopfstütze mit einer Verstellvorrichtung zu schaffen, die einen geringen Platzbedarf hat und die sehr flexibel an das Platzangebot innerhalb der Kopfstütze anpassbar ist.

Die Aufgabe wird gelöst durch eine Kopfstütze mit den Merkmalen des Anspruchs 1.

Die Kopfstütze umfasst ein erstes Element, welches bewegbar zu einem zweiten Element gelagert ist. Die Lagerung kann z.B. von einer Gleitlagerung gebildet sein. Mittels einer Verstellvorrichtung ist das erste Element relativ zu dem zweiten Element verlagerbar. Die Kopfstütze, die wenigstens eine rückenlehnenfeste Tragstange sowie ein relativ zu der Tragstange höhenverstellbares Kopfanlageteil aufweist. Das Kopfanlageteil ist z.B. mittels der Verstellvorrichtung höhenverstellbar an der Tragstange gelagert. Gemäß einer alternativen Ausführungsform ist z.B. die

### BESTÄTIGUNGSKOPIE

Tragstange relativ zu der Rückenlehne bewegbar. Gemäß einer weiteren Alternative kann das Kopfanlageteil z.B. relativ zu einem Grundteil der Kopfstütze etwa in horizontaler Richtung, d.h. zum Kopf des Sitzinsassen hin oder vom dem Kopf wegbewegt werden.

Die Verstellvorrichtung umfasst einen Kanal, welcher dem ersten Element zugeordnet ist. Der Kanal kann z.B. von einer Nut in einer Wand des ersten Elements gebildet sein. Der Kanal kann innerhalb des Fahrzeugausstattungsteils flexibel ausgebildet sein.

In dem Kanal sind Festkörper angeordnet, die in Kontakt stehen und einen Strom bilden. Strom bedeutet im Sinne der Erfindung z.B., dass die Festkörper in einer Reihe hintereinander oder versetzt hintereinander in dem Kanal angeordnet sind. Strom kann z.B. im Sinne der Erfindung auch bedeuten, dass die Festkörper völlig ungeordnet in dem Kanal angeordnet sind. In dem Kanal sind eine Vielzahl von Festkörpern angeordnet. Der Kanal bildet z.B. einen geschlossenen Ring. Der Kanal ist z.B. vollständig mit Festkörpern gefüllt. Die Festkörper bilden z.B. einen geschlossenen Ring oder z.B. eine geschlossene Kette. Kette bedeutet im Sinne der Erfindung z.B., dass die Festkörper eine ringförmige Reihe bilden. Der Begriff Kette kann im Sinne der Erfindung bedeuten, dass die Festkörper aneinander befestigt sind, er kann aber auch bedeuten, dass die Festkörper nicht aneinander befestigt sind. Die Festkörper stehen z.B. lediglich lose in Kontakt. D.h. in diesem Fall sind sie nicht aneinander befestigt.

Die Festkörper sind relativ zu dem Kanal bewegbar oder der Strom von Festkörpern ist relativ zu dem Kanal bewegbar. Die Festkörper sind z.B. von den Wänden des Kanals geführt.

Zwischen den in Kontakt stehenden Festkörpern sind Kräfte, insbesondere Druckkräfte übertragbar. Z.B. sind zwischen den Festkörpern Druckkräfte, aber keine Zugkräfte übertragbar. Die Festkörper stehen z.B. derart in Kontakt, dass bei dem Antrieb eines Festkörpers alle Festkörper in dem Kanal bewegt werden. Insbesondere bilden die Festkörper des Kanals einen Kreislauf. Z.B. ist jeder Festkörper des Stroms antreibbar.

Der Strom dient z.B. einer Überbrückung des Weges zwischen dem Ort eines Antriebs für den Strom und dem Ort, an dem sich wenigstens ein Festkörper an dem zweiten Element oder dem ersten Element abstützt, um eine Verstellung vornehmen zu können. Wenigstens ein Festkörper kann sich mittelbar oder unmittelbar an dem zweiten Element und / oder dem ersten Element abstützen. Z.B. weist ein Festkörper einen Arm auf mit welchem er sich an dem zweiten und / oder dem ersten Element abstützt. Der Festkörper stützt sich z.B. an dem Stellelement und / oder an dem Antriebselement ab.

Ein Vorteil der Erfindung besteht darin, dass mittels der Verstellvorrichtung des erfindungsgemäßen Fahrzeugausstattungsteils der Stellantrieb an beliebiger Stelle in dem Fahrzeugausstattungsteil angeordnet werden kann, unabhängig von dem eigentlichen Ort des Abstützens zwischen dem ersten Element und dem zweiten Element. Die Verstellung mittels eines Festkörperstroms oder einer Festkörperreihe ist funktionssicher und erlaubt eine flexible Führung der Festkörper innerhalb des Fahrzeugausstattungsteils. Der Kanal kann z.B. in einer Ebene geführt sein oder alternativ räumlich geführt sein. Zwei grade Bereiche des Kanals bilden z.B. einen Winkel α≤180° insbesondere α≤90°. Der Kanal kann z.B. in wenigstens einer Kurve geführt sein. Der Kanal kann derart ausgebildet sein, dass er lediglich sehr wenig Raum innerhalb des Fahrzeugausstattungsteils in Anspruch nimmt.

Einer ersten Ausführungsform gemäß ist der Strom oder die Reihe im Wesentlichen inkompressibel. Z.B. sind die Festkörper des Stroms im Wesentlichen inkompressibel. Der Weg, der von einem Antriebs-Festkörper, der mir dem Antriebselement mittelbar oder unmittelbar in Kontakt steht, durchgeführt wird, wird auch von dem Stell-Festkörper durchgeführt, welcher mit dem Stellelement mittelbar oder unmittelbar in Kontakt steht. Zwischen dem Weg des Antriebs-Festkörpers und dem Weg des Stell-Festkörpers ist keine oder lediglich eine unwesentliche Differenz vorhanden. Es kann ein elastisch verformbares Element in den Strom integriert sein, z.B. um notwendige Toleranzen für temperaturbedingte Größenänderung der Festkörper auszugleichen.

Einer weiteren Ausführungsform gemäß ist das mindestens eine Stellelement, welches sich an dem zweiten Element abstützt, in den Strom integriert. Der Festkörper weist z.B. einen Arm auf, mittels welchem er sich an dem zweiten Element abstützt. Das Stellelement kann z.B. an dem zweiten Element befestigt sein und mit einem Bereich in den Strom integriert sein. Der Bereich des Stellelements steht z.B. mit wenigstens einem Festkörper, insbesondere mit zwei Festkörpern, in Kontakt. In dem Bewegungsbereich des Stellelements weist der Kanal z.B. ein Langloch auf, wobei das Langloch von dem Stellelement, insbesondere von dem Arm des Stell-Festkörpers, durchgriffen wird.

Einer Ausführungsform gemäß steht wenigstens ein Festkörper mit einem Antriebselement in Kontakt, mittels welchem der Strom antreibbar ist. Das Antriebselement ist Teil einer Antriebsvorrichtung, mittels welcher wenigstens ein Strom angetrieben werden kann. Das Antriebselement kann z.B. als Antriebsrad oder als Antriebsstange ausgebildet sein. In dem Antriebsrad oder der Antriebsstange ist z.B. wenigstens eine Struktur ausgebildet, die komplementär ist zu der Oberfläche des Festkörpers und die formschlüssig mit mindestens einem Festkörper in Eingriff gebracht werden kann. Das Antriebselement kann z.B. selbst von einem Motor, z.B. einem Elektromotor, angetrieben werden.

Die Verstellvorrichtung kann z.B. wenigstens zwei Ströme umfassen. Z.B. weist ein erster Strom ein erstes Stellelement auf, welches mit einer ersten Tragstange zusammenwirkt und ein zweiter Strom weist ein zweites Stellelement auf, welches mit einer zweiten Tragstange einer Kopfstütze zusammenwirkt.

Gemäß einer weiteren Ausgestaltung der Erfindung treibt das Antriebselement mindestens einen Strom an. Wie bereits oben erwähnt, kann die Verstellvorrichtung zwei oder mehr Ströme umfassen. Beide Ströme werden z.B. von einem einzigen Antriebselement angetrieben. Z.B. steht ein erster Bereich eines Antriebsrades mit dem ersten Strom und ein zweiter Bereich des Antriebsrades mit dem zweiten Strom in Kontakt. Der zweite Bereich liegt dem ersten Bereich z.B. diametral gegenüber. Alternativ können auch mehrere Antriebselemente für den Strom von Festkörpern eines Kanals oder für die Ströme von Festkörpern von wenigstens zwei Kanälen vorgesehen sein. Z.B. sind mehrere Kanäle mit jeweils einem Strom von Festkörpern vorgesehen. Jedem dieser Kanäle kann ein gesondertes Antriebselement zugeordnet sein oder jedem dieser Kanäle können mehrere Antriebselemente zugeordnet sein.

Einer weiteren Ausführungsform gemäß ist wenigstens ein Festkörper von einer Kugel gebildet. Eine Kugel kann sich vorteilhaft innerhalb des Kanals bewegen ohne zu verkanten. Darüber hinaus ist eine Kugel auf einfache Weise formschlüssig mit einem Antriebselement in Eingriff bringbar. Wenn der Strom von Kugeln gebildet ist, ist der Reibungswiderstand des Stroms innerhalb des Kanals gering. Mittels eines Stroms, der aus Kugeln gebildet ist, ist eine Kraftübertragung auf einfache Weise möglich, auch wenn der Strom um Kurven und Ecken geführt ist. Alternativ können die Festkörper auch von Freiformteilen oder von anderen geometrischen Figuren, wie z.B. Quader, Würfel, Polyeder (z.B. kugelförmiger Polyeder) gebildet sein.

Der Durchmesser des Festkörpers entspricht z.B. im Wesentlichen dem Strömungsquerschnitt des Kanals. Im Sinne der Erfindung bedeutet das, dass in einer Ebene quer zur Strömungsrichtung des Stroms der Festkörper etwa dieselbe Breite aufweist, wie der Kanal. In diesem Fall können sich die Kugeln nicht zur Strömungsrichtung versetzt anordnen. Es werden weniger Kugeln benötigt, um die gewünschte Länge des Stroms zu erzeugen. Darüber hinaus ist der in Strömungsrichtung übertragene Anteil der Verstellkraft größer. Gemäß einer alternativen Ausführungsform ist der Strömungsquerschnitt des Kanals größer als ein Festkörper, so dass sich die Festkörper versetzt hintereinander oder alternativ auch nebeneinander anordnen können.

Erfindungsgemäß ist das erste Element oder das zweite Element von einem höhenverstellbar gelagerten Kopfanlageteil und das zweite Element oder das erste Element von einer Tragstange Kopfstütze oder von der Rückenlehne des Fahrzeugsitzes gebildet. Die Kopfstütze weist ein Kopfanlageteil auf, welches an einem Basiselement gelagert ist, wobei das Basiselement auf Tragstangen gelagert ist. Das Kopfanlageteil kann horizontal oder Vertikal relativ zu dem Basiselement gelagert sein. In diesem Fall kann das Basiselement das erste Element oder das zweite Element bilden und das Kopfanlageteil das zweite Element oder das erste Element bilden.

Weitere Vorteile der Erfindung ergeben sich anhand von in den Fig. dargestellten Ausführungsbeispielen. Es zeigen:
Fig. 1 eine schematische rückwärtige Ansicht der Kopfstütze, wobei eine hintere Abdeckblende aus Gründen der Übersichtlichkeit nicht dargestellt ist,
Fig. 2 eine schematische Schnittdarstellung der Kopfstütze gemäß Fig. 1 in einer unteren Endposition, wobei ein Kopfanlageteil sowie ein Kopfpolster nicht dargestellt sind,
Fig. 3 eine schematische Schnittdarstellung der Kopfstütze gemäß Fig. 2 in einer oberen Endposition,
Fig. 4 eine schematische perspektivische Frontansicht der Kopfstütze in der unteren Endposition, wobei diverse Teile der Kopfstütze nicht dargestellt sind,

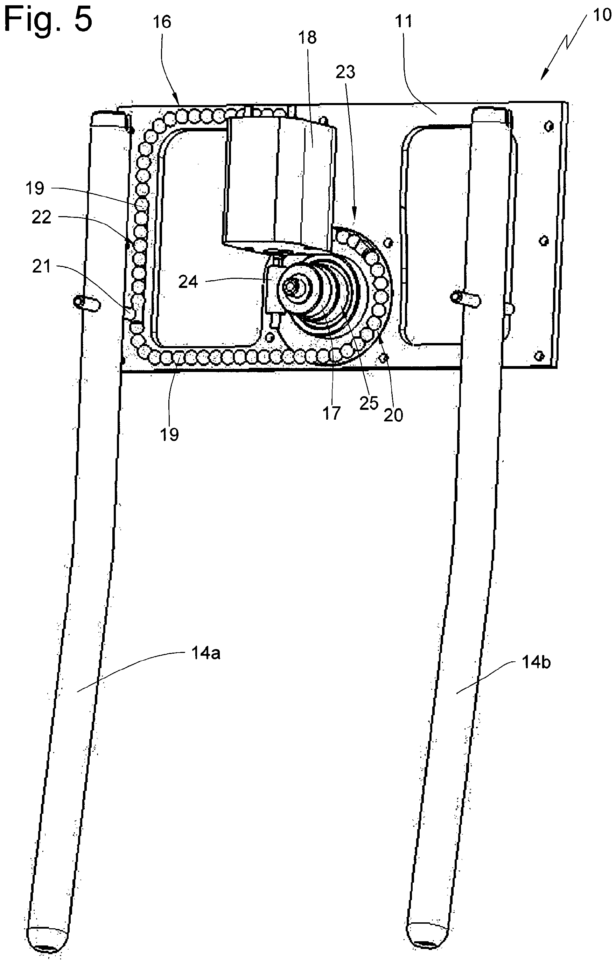

Fig. 5 in Anlehnung an Fig. 4 die Kopfstütze in der oberen Endposition,

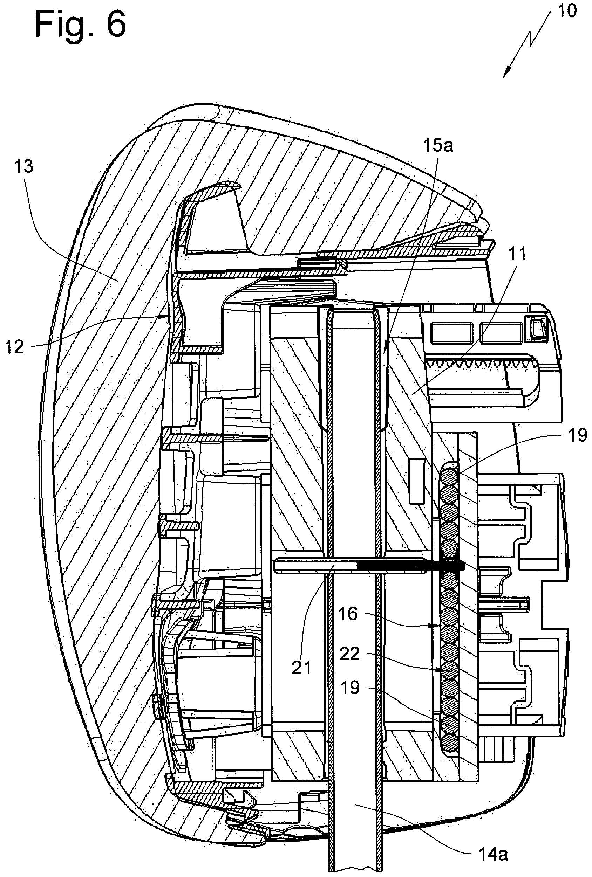

Fig. 6 eine schematische Längsschnittdarstellung gemäß Schnittlinie VI - VI in Fig. 1,
Fig. 7 eine schematische rückwärtige Ansicht einer anderen Ausführungsform der Kopfstütze, wobei eine Abdeckblende der Übersichtlichkeit halber nicht dargestellt ist,
Fig. 8 eine schematische Ansicht der Kopfstütze gemäß Fig. 7, wobei ein Kopfanlageteil nicht dargestellt ist, und
Fig. 9 eine schematische perspektivische Frontansicht der Kopfstütze, wobei diverse Teile der Kopfstütze nicht dargestellt sind.

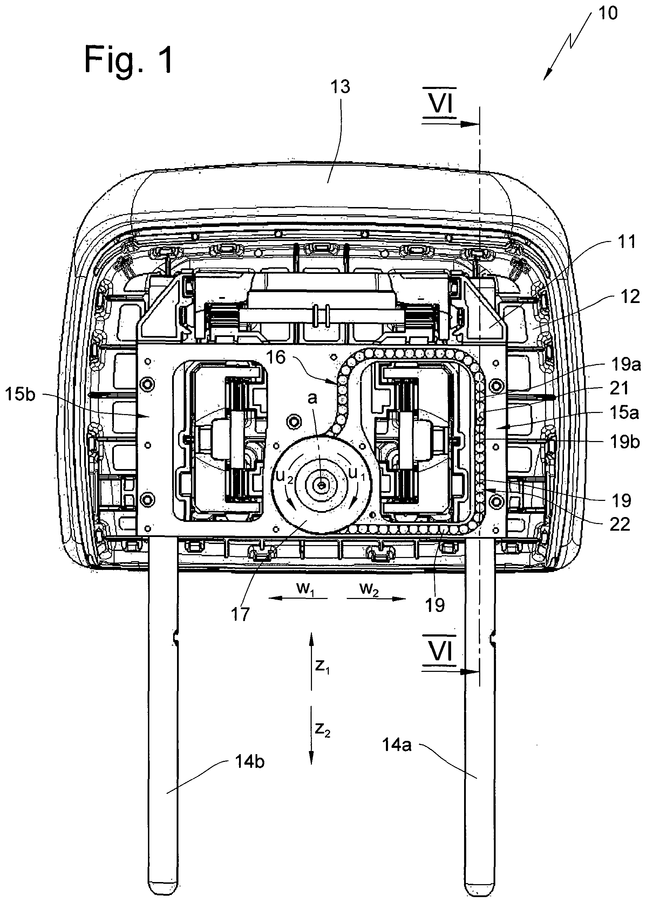

In Fig. 1 ist eine Kopfstütze insgesamt mit dem Bezugszeichen 10 bezeichnet. Gleiche Bezugszeichen in den Fig. bezeichnen entsprechende Teile, auch wenn kleine Buchstaben nachgestellt sind.

Die Kopfstütze 10 umfasst ein Basisteil 11, an welchem ein Kopfanlageteil 12 befestigt ist. Das Kopfanlageteil 12 ist mit einem Polster 13 versehen. Mittels Tragstangen 14a und 14b, ist die Kopfstütze 10 an einer nicht dargestellten Rückenlehne eines Fahrzeugsitzes befestigbar. Die Lagerung des Basisteils 11 an den Tragstangen 14a und 14b umfasst in dem Basisteil 11 ausgebildete Führungen 15a und 15b. Mittels der Führungen 15a und 15b ist das Basisteil 11 relativ zu den Tragstangen 14a und 14b in Richtung z1, z2 bewegbar.

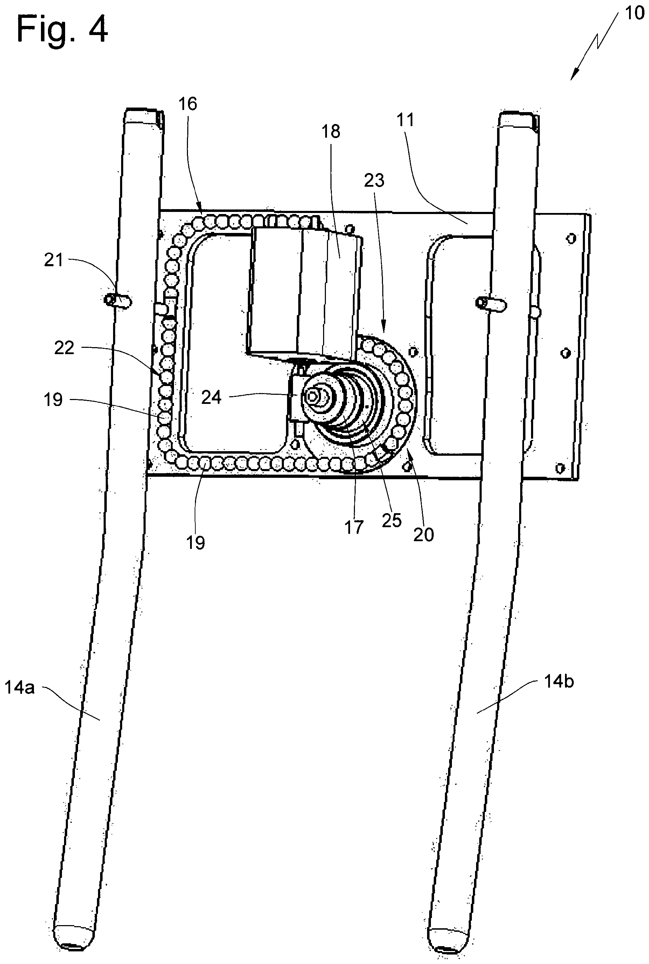

Die Verstellung des Basisteils 11 in Richtung z1, z2 erfolgt mittels einer Verstellvorrichtung, die einen Strömungskanal in Form einer Nut 16 umfasst. In der Nut 16 sind Festkörper in Form von Kugeln 19 angeordnet, die eine im Wesentlichen nicht komprimierbare Kugelreihe 22 bilden. Die Kugelreihe ist mittels eines Antriebsrades 17, welches von einem Motor 18 (siehe z.B. Fig. 4) antreibbar ist, relativ zu der Nut 16 bewegbar. Der Motor 18 treibt ein Ritzel 24 an, welches mit einer Verzahnung 25 des Antriebsrades 17 in Eingriff steht. Zwischen zwei Kugeln 19a und 19b ist ein Stellelement 21 in die Kugelreihe integriert. Das Stellelement 21 ist fest mit der Tragstange 14a verbunden.

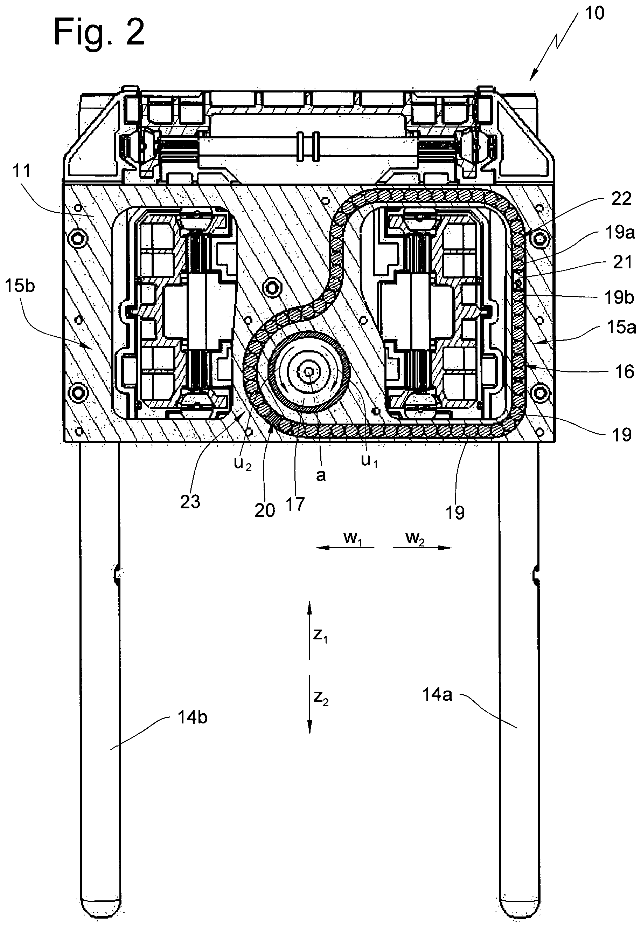

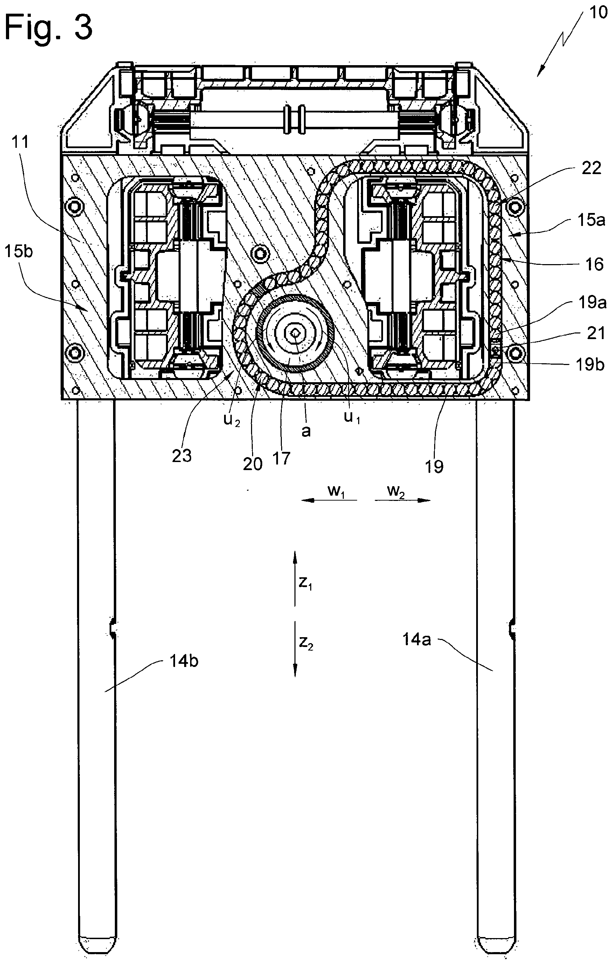

In Fig. 2 ist das Basisteil 11 ohne das Kopfanlageteil 12 dargestellt. Das Basisteil 11 befindet sich gemäß Fig. 2 in einer ersten unteren Endposition. Durch eine Bewegung in Richtung z1 kann das Basisteil 11 in eine in Fig. 3 dargestellte zweite obere Endposition bewegt werden. Aus der zweiten Endposition kann das Basisteil 11 durch eine Bewegung in Richtung z2 in die erste Endposition bewegt werden. Darüber hinaus ist das Basisteil stufenlos in Positionen zwischen der ersten Endposition und der zweiten Endposition bewegbar.

Der Antrieb der Kugelreihe 22 erfolgt durch das Antriebsrad 17, welches in einem Bereich 23 der Nut 16 eine Wand der Nut 16 ausbildet. In dem Antriebsrad 17 ist eine zu der Kugelreihe komplementäre Struktur 20 eingeformt, so dass das Antriebsrad 17 formschlüssig mit wenigstens einer, insbesondere mit mehreren Kugeln 19 der Kugelreihe 22 in Eingriff steht und diese Kugeln 19 fördern kann.

Wird das Antriebsrad 17 ausgehend von der in Fig. 2 dargestellten ersten Position des Basisteils 11 um eine Drehachse a in Richtung u1 gedreht, findet eine Förderbewegung der Kugelreihe 22 in Förderrichtung w1 statt. Dabei wird das Stellelement 21 relativ zu dem Basisteil 11 in Richtung w1 bewegt, wobei sich das Basisteil 11 relativ zu der Tragstange 14a in Richtung z1 bewegt. Eine maximale Verstellung des Basisteils 11 in Richtung z1 in die zweite Endposition gemäß Fig. 3 ist möglich.

Sobald kein Antrieb mehr durch das Antriebsrad 17 stattfindet, verbleibt das Basisteil 11 in der eingestellten Position. Die Selbsthemmung des Motors 18 sowie eines zwischen dem Motor 18 und dem Antriebsrad 17 ausgebildeten Getriebes verhindert ein ungewolltes Verstellen in der jeweils eingestellten Position des Basisteils 11.

Soll das Basisteil 11 z.B. aus der in Fig. 3 dargestellten Position in Richtung z2 verstellt werden, so wird das Antriebsrad 17 von dem Motor 18 in Richtung u2 gedreht. Die Kugelreihe 22 bewegt sich dadurch in Förderrichtung w2 relativ zu dem Basisteil 11. Dabei wird auch das Stellelement 21 in Richtung w2 bewegt, wobei sich das Basisteil 11 in Richtung z2 verlagert.

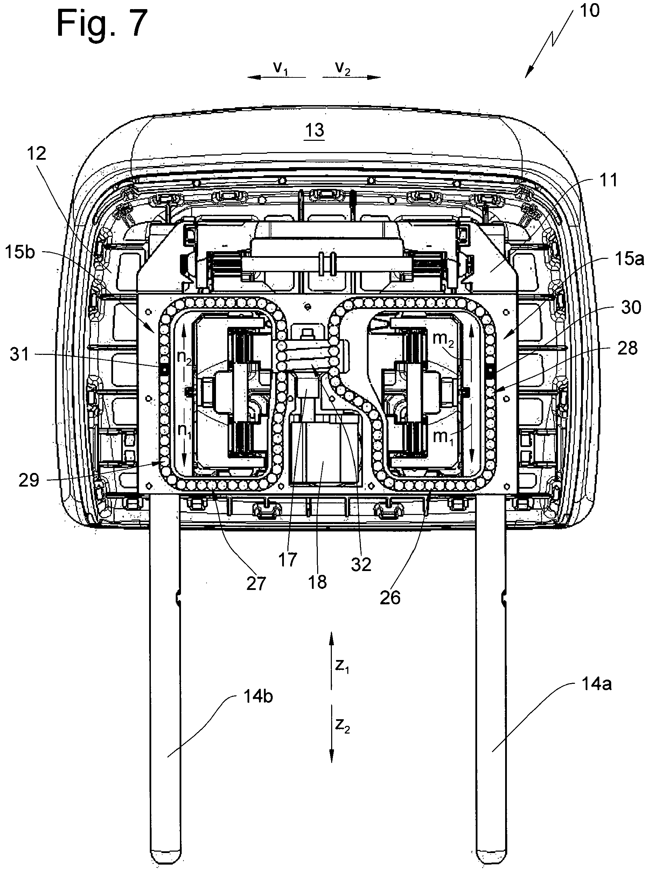

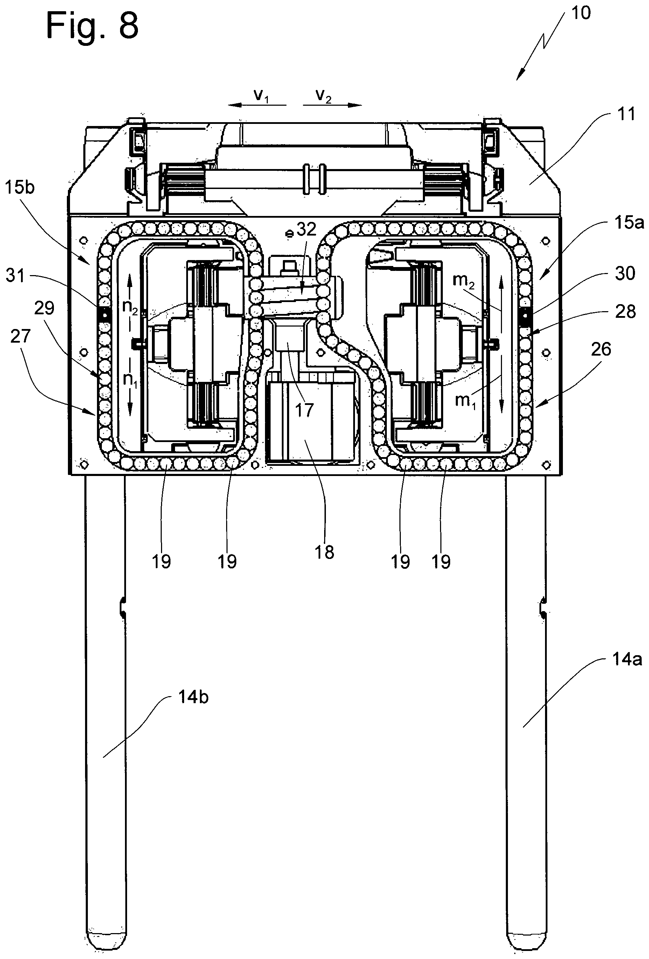

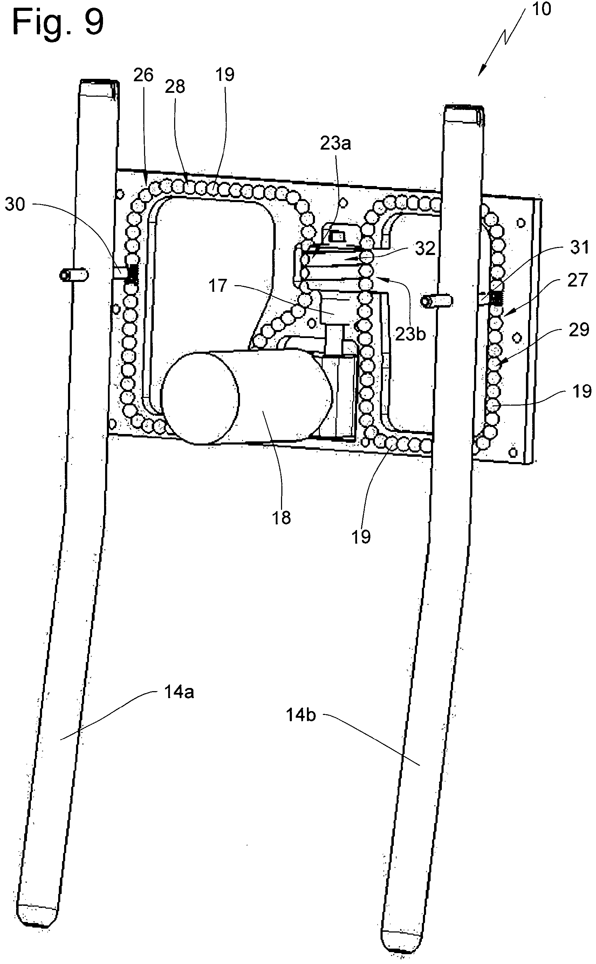

Eine andere Ausführungsform der Kopfstütze 10 ist in den Fig. 7 bis 9 dargestellt. Das Basisteil 11 umfasst Nuten 26 und 27. In der Nut 26 ist eine Kugelreihe 28 aus Kugeln 19 und in der Nut 27 eine Kugelreihe 29 aus Kugeln 19 angeordnet. In die Kugelreihe 28 ist ein Stellelement 30 und in die Kugelreihe 29 ein Stellelement 31 integriert. Das Stellelement 30 ist fest mit der Tragstange 14a und das Stellelement 31 fest mit der Tragstange 14b verbunden. Ein mit einer Schneckenverzahnung 32 ausgebildetes Antriebsrad 17 steht mit Kugeln 19 der Kugelreihe 28 sowie der Kugelreihe 29 in Eingriff.

Wird das Antriebsrad 17 von dem Motor 18 in Richtung v1 gedreht, bewegt sich die Kugelreihe 28 in Richtung m1 und die Kugelreihe 29 in Richtung n1. Das Basisteil 11 verlagert sich in Richtung z1. Bei umgekehrter Drehrichtung des Antriebsrades 17 in Richtung v2 bewegt sich die Kugelreihe 28 in Richtung m2 und die Kugelreihe 29 in Richtung n2. Das Basisteil 11 verlagert sich dann in Richtung z2.

## Patentansprüche

1. Kopfstütze (10), mit einem ersten Element (11), welches bewegbar zu mindestens einem zweiten Element (14a, 14b) gelagert ist, wobei eine Verstellvorrichtung vorgesehen ist, mittels welcher das erste Element (11) und das zweite Element (14) relativ zueinander bewegbar sind, wobei die Verstellvorrichtung dem ersten Element (11) zugeordnet ist und wenigstens einen Kanal (16) umfasst, **dadurch gekennzeichnet, dass** in dem Kanal (16) in Kontakt stehende Festkörper (19) angeordnet und geführt sind, wobei die Festkörper (19) relativ zu dem Kanal (16) bewegbar sind und wobei wenigstens ein Festkörper (19) sich an dem zweiten Element (14) abstützt, dass das erste Element oder das zweite Element von einem höhenverstellbar gelagerten Kopfanlageteil (11) einer Kopfstütze (10) für einen Fahrzeugsitz gebildet ist und das zweite Element oder das erste Element von einer Tragstange (14) der Kopfstütze (10) oder von einer Rückenlehne des Fahrzeugsitzes gebildet ist oder dass das erste Element oder das zweite Element von einem horizontal bewegbar gelagerten Kopfanlageteil (11) einer Kopfstütze (10) eines Fahrzeugsitzes gebildet ist und das zweite Element oder das erste Element von einem an der Rückenlehne des Fahrzeugsitzes gelagerten Basisteil der Kopfstütze (10) gebildet ist.

2. Kopfstütze nach Anspruch 1, **dadurch gekennzeichnet, dass** die Festkörper (19) lose in Kontakt stehen.

3. Kopfstütze nach Anspruch 1 oder 2, **dadurch gekennzeichnet, dass** der Festkörper (19) im Wesentlichen inkompressibel ist.

4. Kopfstütze nach Anspruch 1 oder 2, **dadurch gekennzeichnet, dass** die Festkörper (19) eine Reihe oder einen Strom (22) bilden.

5. Kopfstütze nach Anspruch 4, **dadurch gekennzeichnet, dass** mindestens ein Stellelement (21) in die Reihe oder den Strom (22) integriert ist, welches sich an dem zweiten Element (14) abstützt.

6. Kopfstütze nach Anspruch 4 oder 5, **dadurch gekennzeichnet, dass** wenigstens ein Festkörper (19) mit einem Antriebselement (20) in Kontakt steht, mittels welchem die Reihe oder der Strom (22) antreibbar ist.

7. Kopfstütze nach einem der vorangehenden Ansprüche, **dadurch gekennzeichnet, dass** wenigstens ein Festkörper (19) von einer Kugel gebildet ist.

8. Kopfstütze nach einem der vorangehenden Ansprüche, **dadurch gekennzeichnet, dass** der Durchmesser des Festkörpers (19) im Wesentlichen dem Strömungsquerschnitt des Kanals (16) entspricht.

9. Kopfstütze nach einem der Ansprüche 4 bis 8, **dadurch gekennzeichnet, dass** die Verstellvorrichtung wenigstens zwei Kanäle (16) aufweist, wobei jedem Kanal (16) eine Reihe oder ein Strom (28, 29) zugeordnet ist.

10. Kopfstütze nach einem der Ansprüche 4 bis 9, **dadurch gekennzeichnet, dass** das Antriebselement (20) mindestens eine Reihe oder einen Strom (28, 29) antreibt.

11. Kopfstütze nach einem der vorangehenden Ansprüche, **dadurch gekennzeichnet, dass** der Kanal (16) einen geschlossenen Ring bildet.

12. Kopfstütze nach einem der vorangehenden Ansprüche, **dadurch gekennzeichnet, dass** die Festkörper (19) eine ringförmige Reihe bilden.

## Claims

1. Headrest (10), comprising a first element (11) movable relative to at least one second element (14a, 14b) and an adjustment mechanism that can move the first element (11) relative to the second element (14), whereby the adjustment mechanism is provided on the first element (11) and comprises at least one passage (16), **characterized in that** solid bodies (19) in contact with one another are arranged and guided in the passage (16), the solid bodies (19) are movable relative to the passage (16), and at least one solid body (9) bears on the second element (14), that the first element or the second element is a height-adjustable and movable head-support part (11) of a headrest (10) for a vehicle seat, while the second element or the first element is a support rod (14) of the headrest (10) or of a backrest of the vehicle seat or that the first element or the second element is a horizontally movable head-support part (11) of a headrest (10) of a vehicle seat, while the second element or the first element is a base part of the headrest (10) that is mounted on the backrest of the vehicle seat.

2. Headrest according to claim 1, **characterized in that** the solid bodies (19) are in loose contact.

3. Headrest according to claims 1 or 2, **characterized in that** the solid bodies (19) are essentially incompressible.

4. Headrest according to claims 1 or 2, **characterized in that** the solid bodies (19) form a string or a row (22).

5. Headrest according to claim 4, **characterized in that** at least one adjustment element (21) is integrated in the string or row (22) and bears on the second element (14).

6. Headrest according to claims 4 or 5, **characterized in that** at least one solid body (19) is in contact with a drive element (20) that can move the string or row (22).

7. Headrest according to one of the foregoing claims, **characterized in that** at least one solid body (19) is a ball.

8. Headrest according to one of the foregoing claims, **characterized in that** a diameter of each of the solid bodies (19) essentially matches a flow cross-section of the passage (16).

9. Headrest according to one of claims 4 through 8, **characterized in that** the adjustment mechanism includes at least two passages (16) each holding a respective string or row (28, 29).

10. Headrest according to one of claims 4 through 9, **characterized in that** the drive element (20) drives the string or row (28, 29).

11. Headrest according to one of the foregoing claims, **characterized in that** the passage (16) forms a closed loop.

12. Headrest according to one of the foregoing claims, **characterized in that** the solid bodies (19) form an annular string.

## Revendications

1. Appuie-tête (10) avec un premier élément (11) qui est monté de manière mobile par rapport à au moins un deuxième élément (14a, 14b), dans lequel il est prévu un dispositif de réglage au moyen duquel le premier élément (11) et le deuxième élément (14) peuvent être mus l'un par rapport à l'autre, le dispositif de réglage étant associé au premier élément (11) et comprenant au moins un canal (16), **caractérisé en ce que** des corps solides en contact (19) sont disposés et guidés dans le canal (16), ces corps solides (19) étant mobiles par rapport au canal (16) et au moins un corps solide (19) s'appuyant contre le deuxième élément (14), que le premier élément ou le deuxième élément est formé par un élément d'appui de la tête (11) réglable en hauteur d'un appuie-tête (10) de siège de véhicule et le deuxième élément ou le premier élément est formé par une tige de support (14) de l'appuie-tête (10) ou par un dossier du siège de véhicule ou que le premier élément ou le deuxième élément est formé par un élément d'appui de la tête (11) mobile horizontalement d'un appuie-tête (10) de siège de véhicule et le deuxième élément ou le premier élément est formé par un élément de base de l'appuie-tête (10) monté sur le dossier du siège de véhicule.

2. Appuie-tête (10) selon la revendication 1, **caractérisé en ce que** les corps solides (19) sont faiblement en contact.

3. Appuie-tête selon la revendication 1 ou 2, **caractérisé en ce que** le corps solide (19) est sensiblement incompressible.

4. Appuie-tête selon la revendication 1 ou 2, **caractérisé en ce que** les corps solides (19) forment une chaîne ou un flux (22).

5. Appuie-tête selon la revendication 4, **caractérisé en ce qu'**au moins un élément de réglage (21) qui s'appuie contre le deuxième élément (14) est intégré dans la chaîne ou le flux (22).

6. Appuie-tête selon la revendication 4 ou 5, **caractérisé en ce qu'**au moins un corps solide (19) est en contact avec un élément d'entraînement (20) au moyen duquel la chaîne ou le flux (22) peut être entraîné.

7. Appuie-tête selon une des revendications précédentes, **caractérisé en ce qu'**au moins un corps solide (19) est constitué par une bille.

8. Appuie-tête selon une des revendications précédentes, **caractérisé en ce que** le diamètre du corps solide (19) correspond sensiblement à la section d'écoulement du canal (16).

9. Appuie-tête selon une des revendications 4 à 8, **caractérisé en ce que** le dispositif de réglage possède au moins deux canaux (16), une chaîne ou un flux (28, 29) étant associé à chaque canal (16).

10. Appuie-tête selon une des revendications 4 à 9, **caractérisé en ce que** l'élément d'entraînement (20) entraîne au moins une chaîne ou un flux (28, 29).

11. Appuie-tête selon une des revendications précédentes, **caractérisé en ce que** le canal (16) forme un circuit fermé.

12. Appuie-tête selon une des revendications précédentes, **caractérisé en ce que** les corps solides (19) forment une chaîne annulaire.
